# EUROPEAN PATENT APPLICATION

(11) **EP 2 060 783 A1**
(43) Date of publication of application: **20.05.2009**
(21) Application number: 06775583.5
(22) Date of filing: 04.09.2006
(51) Int. Cl.: F03D 1/00

(54) **A DRIVING BELT SPEEDUP DRIVING DEVICE OF A WIND GENERATING SET**

(71) Applicant: Sun, Shouquan, Harbin Heilongjiang 150001 (CN)
(72) Inventor: Sun, Shouquan, Harbin Heilongjiang 150001 (CN)
(74) Representative: Stuttard, Garry Philip
(86) International application number: PCT/CN2006/002266
(87) International publication number: WO 2008/028335

(57) **Abstract**

A transmission belt speedup driving device of wind power generator set, includes a frame; a generator and speedup driving device mounted on a stand. The said speedup transmission belt device mounts between the other end of a spindle and the said generator, wherein a first level pulley of the said transmission belt device connects with an axle wind wheel through a coupling.

## Description

### Field of Technology

The present invention relates to a technology for generating power by utilizing the wind power energy, and a transmission belt speedup driving device of wind power generator set.

### Background of the Invention

To meet the use requirements of human beings on wind power and enhance environmental protection, wind power as the substitute energy for coal, petroleum and other fossil energy sources, and as a renewable energy, is generally regarded by all countries. Wind power industry has also been regarded by all countries, and is now undergoing a rapid development. Currently, the speedup transmission between the wind wheel and the generator of the wind power generator is finished through a gear case, but the gear case is the part with frequent failures of the wind power generator. Generally, the weight of the gear case is more than ten to dozens of tons and the stand is more than 10m or 100m above the ground,, once the failure occurs, it is quite hard to maintain and replace the parts, and the maintenance cost is also quite high. With the fast development of large wind power generator set, the gear case becomes bigger and heavier increasingly, which causes inconvenience for transportation and lifting at the same time. The gear case is an indispensable part of the wind power generator, which increases the cost of wind power generator due to high precision and expensive price.

### Summery of the Invention

It is an object of the present invention to provide a transmission belt speedup driving device of wind power generator, which is used for completing the speedup between the wind wheel and the generator of the wind power generator set, thereby reducing the generating cost and improving service life. The aforesaid object can be realized through the following technical proposal: A transmission belt speedup driving device of wind power generator set, comprising a frame; a generator mounted on the said frame; a set of transmission belt speedup driving device connected with the input end of the said generator; a first level pulley of the said transmission belt device connected with an axle of wind wheel through a coupling.

For the said transmission belt speedup driving device of wind power generator set, the said transmission belt speedup driving device is 1-4 sets of transmission belt mechanism composed of transmission belt(s) and pulley(s), the diameter of a driven pulley is less than that of a driving pulley, and transmission mechanisms are connected through a coupling, and the said transmission belt is provided with a tensioner.
For the said transmission belt speedup driving device of wind power generator set, the said transmission belt is an arc-gear synchronous belt, or a T type synchronous belt, or a V-ribbed belt, or a banded belt.

### Beneficial effects of the Present invention:

1. Blades are fixed on a wheel hub, namely being the wind wheel, which is fixed on a spindle. Under the action of wind, the blades rotate driven by the wind to drive the spindle to rotate at the same time. Under the action of a coupling, the kinetic energy is transmitted to a first level driving pulley to drive the driven pulley under the action of a transmission belt, with the diameter of the driving pulley larger than that of the driven pulley, to realize the purpose of speedup. The driven pulley transmits the kinetic energy after speedup to a second level transmission system which further transmits the kinetic energy after speedup to the third level transmission system through another speedup; the third level transmission system carries out the speedup again and then transmits the kinetic energy to the generator, so as to realize a purpose of full process speedup transmission. The diameter for the driving pulley of the above each level of transmission system is larger than that of the driven pulley, to realize speedup transmission. The speedup belt transmission system can be either a single level transmission or a multi-level transmission according to the need. Replacing the prior gear case transmission by the speedup belt transmission can reduce the cost of the wind power generator; meanwhile, the speedup belt transmission has the advantages of reducing vibration of the generator set, enhancing the service life and decreasing the noise of the generator set, etc.
2. The whole transmission system of the present invention uses the transmission belt for transmission. The transmission belt speedup driving device can either adopt single level transmission or multi-level transmission to meet the requirements of the power generator. The diameter of the driving pulley is larger than that of the driven pulley to realize the purpose of speedup, to reduce the expensive gear case, thereby realizing low cost of the transmission system. The cost of transmission belt speedup driving device can reduce the cost of the wind power generator set, which will have good effect on promoting the development of wind power.
3. The product of the present invention reduces the weight on the transmission part, and the transmission belt is made according to special specification and material. Compared with the prior gear case transmission, the device has the advantages of light weight, low failure rate, easy installation and replacement, and can greatly reduce the cost of the wind power generator set.
4. The belt transmission is convenient for maintenance and replacement, and the maintenance cost is lower than that of the traditional gear case. With the rapid development of large wind power generator set, the product of the present invention appears to be more convenient in transportation and lifting.

### Brief Description of the Drawings

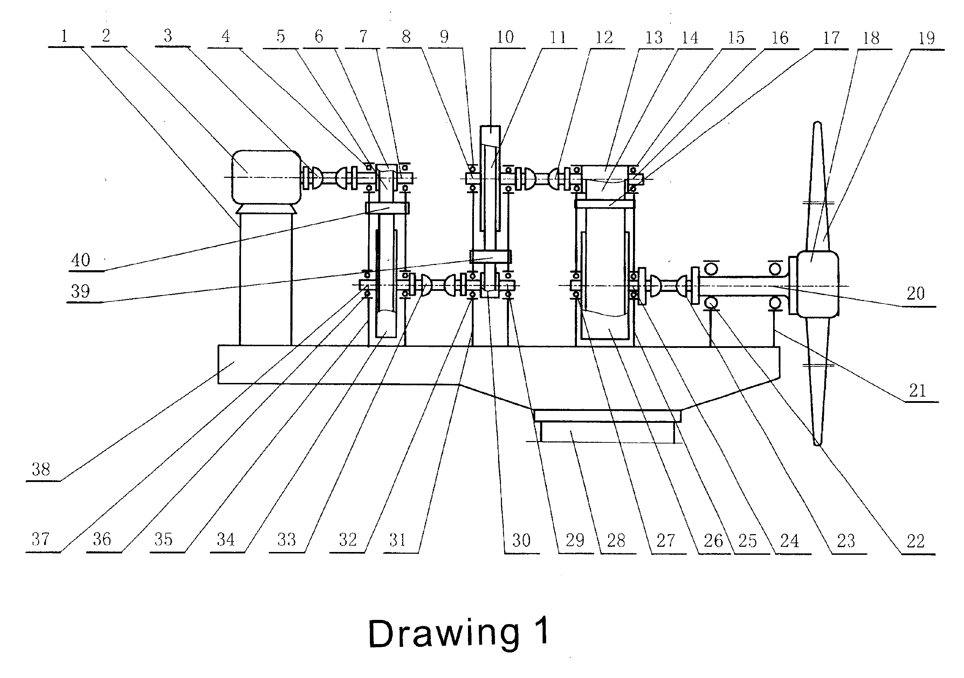

FIG. 1 shows a schematic view of the product
   Part Number in the figure: 1. generator frame, 2. generator, 3. coupling, 4.
bearing box, 5. transmission belt, 6. driven pulley, 7. axle of driven pulley, 8. axle of second level driving pulley, 9. bearing box, 10. second level driving pulley, 11. transmission belt, 12. coupling, 13. driven pulley, 14. transmission belt, 15. bearing box, 16. axle of driven pulley, 17. tensioner, 18. wheel hub, 19. blades, 20. spindle, 21. frame, 22. bearing box, 23. coupling, 24. axle of first level driving pulley, 25. frame, 26. first level driving pulley, 27. bearing box, 28. tower, 29. axle of driven pulley, 30. driven pulley, 31. frame, 32. bearing box, 33. coupling, 34. third level driving pulley, 35. frame, 36. bearing box, 37. third level driving pulley, 38. stand, 39. tensioner, 40. tensioner.

### Specific Implementation Method

### Embodiment 1:

The present invention enumerates a three-level speedup mechanism, which can only comprise the first level or the second level during the use, or increase the fourth level or more levels, and the attached structure is only an embodiment of the invention. The embodiment includes a generator frame 1; a generator 2; a coupling 3; a bearing box 4; a transmission belt 5 which is an arc-gear synchronous belt, or a T type synchronous belt, or a V-ribbed belt or a banded belt, or other types of belts adopted; an axle of driven pulley 6 and an axle of driven pulley 7 in the first level transmission part; an axle of second level driving pulley 8; a bearing box 9, a second level driving pulley 10; a transmission belt 11; a coupling 12; a driven pulley 13; a driving pulley 14; a bearing box 15; an axle of driven pulley 16, a tensioner 17; a wheel hub 18; blades 19; a spindle 19; a spindle 20; a frame 21; a bearing box 22; a coupling 23; an axle of first level driving pulley 24; a frame 25; a first level driving pulley 26; a bearing box 27; a tower 28; an axle of driven pulley 29; a driven pulley 30; a frame 31; a bearing box 32; a coupling 33; a third level driving pulley 34; a frame 35; a bearing box 36; an axle of third level driving pulley 37; a stand 38; a tensioner 39; and a tensioner 40.
The blades 19 are connected with the wheel hub 18, and two bearing boxes 22 is respectively mounted on the left and right of the spindle 20 and fixed on the frame 21; one end of the spindle is fastened on the wheel hub 18, while the other end is connected with the coupling 23 which is connected with the axle of first level driving pulley 24 to realize the kinetic energy transmission; the first level driving pulley 26 is fixed on the axle of first level driving pulley 24 on which two bearing boxes 27 is mounted respectively on the left and right and fixed on the frame 25; the driven pulley 13 is fixed on the axle of driven pulley 16 on which two bearing boxes 15 is mounted respectively on the left and right and fixed on the frame 25; the first level driving pulley 26 is connected with the driven pulley 13 through the transmission belt 14, and can realize speedup transmission; the two ends of the tensioner 17 are fixed on the frame 25 and used for tensioning the transmission belt 14; one end of the coupling 12 is connected with the axle of driven pulley 16, while the other end is connected with the axle of second level driving pulley 8 to realize kinetic energy transmission.

The second level driving pulley 10 is fixed on the axle of second level driving pulley 8 on which two bearing boxes 9 is mounted respectively on the left and right and fixed on the frame 31; the second level driving pulley 10 is connected with the driven pulley 30 through the transmission belt 11, and can realize the speedup transmission; the two ends of the tensioner 39 are fixed on the frame 31 and used for tensioning the transmission belt 11; the driven pulley 30 is fixed on the axle of driven pulley 29 on which two bearing boxes 32 is respectively mounted on the left and right and fixed on the frame 31; one end of the coupling is connected with the axle of driven pulley 29, while the other end is connected with the axle of third level driving pulley 37 to realize transmission; the third level driving pulley 34 is fixed on the axle of third driving pulley 37 on which two bearing boxes 36 is mounted respectively left and right and fixed on the frame 35; the third level driving pulley 34 is connected with the driven pulley 6 through the transmission belt 5 to realize speedup transmission; the two ends of the tensioner 40 are respectively fixed on frame 35 to be used for tensioning the transmission belt 5; the driven pulley 6 is fixed on the axle of driven pulley 7 on which two bearing boxes 4 is mounted respectively on the left and right and fixed on the frame 34; one end of coupling 3 is connected with the axle of driven pulley 7 and the other end is connected with generator 2 to realize kinetic energy transmission, and finally realize power generating; the generator 2 is fixed on the frame 1, while the frame 35, the frame 31, the frame 25, the frame 21 and the frame 1 are respectively fixed on the stand 38 which is mounted on the tower 28.

## Claims

1. A transmission belt speedup driving device of wind power generator set, including: a frame, which is **characterized in that** the said frame is provided with a generator; a set of transmission belt speedup driving device is connected with the input end of the said generator; a first level pulley of the said transmission belt device is connected with an axle wind wheel through a coupling.

2. The transmission belt speedup driving device of wind power generator set according to Claim 1, **characterized in that** the said transmission belt speedup driving device is 1-4 set(s) of transmission belt mechanism composed of transmission belts and pulleys, wherein, the diameter of a driven pulley in the said pulleys is less than that of a driving pulley, and each set of transmission belt mechanism is connected through a coupling, and the said transmission belt is provided with a tensioner.

3. The transmission belt speedup driving device of wind power generator set according to Claim 1 or 2, **characterized in that** the said transmission belt is an arc-gear synchronous belt, or a T type synchronous belt, or a V-ribbed belt, or a banded belt.
